# FASCICULE DE BREVET EUROPEEN

(11) **EP 2 286 508 B1**
(45) Date de publication et mention de la délivrance du brevet: **07.03.2012**
(21) Numéro de dépôt: 09757719.1
(22) Date de dépôt: 12.05.2009
(51) Int. Cl.: H02M 3/335, H02M 1/32

(54) **LIMITATION DE SURTENSIONS DANS UN CONVERTISSEUR A DECOUPAGE**
ÜBERSPANNUNGSBEGRENZUNG IN EINEM TIEFSETZSTELLER
OVERVOLTAGE LIMITATION IN A CHOPPING CONVERTER

(30) Priorité: 13.05.2008 FR 0853080
(43) Date de publication de la demande: 23.02.2011
(73) Titulaire: STMicroelectronics (Tours) SAS, 37100 Tours (FR)
(72) Inventeur: RIVET, Bertrand, F-37210 Vouvray (FR); HAMADOU, Aurélien, F-37000 Tours (FR)
(74) Mandataire: de Beaumont, Michel
(86) Numéro de dépôt international: PCT/FR2009/050864
(87) Numéro de publication internationale: WO 2009/147343

(56) Documents cités:
- DE-A1- 3 639 495
- US-A- 5 943 225
- US-A1- 2006 158 127

## Description

### Domaine de l'invention

La présente invention concerne de façon générale les circuits électroniques et, plus particulièrement, les circuits d'alimentation à découpage utilisant un transformateur.

### Exposé de l'art antérieur

Dans les alimentations à découpage qui utilisent un transformateur, un ou plusieurs interrupteurs statiques (par exemple une diode de roue libre) présents au secondaire du transformateur sont susceptibles d'engendrer des pics de tension lors de leur ouverture (blocage) en raison d'un phénomène dit de charges recouvrées. L'interrupteur doit supporter de telles surtensions en inverse. Or, plus l'interrupteur tient la tension inverse, plus sa chute de tension en direct est importante, donc plus le rendement du convertisseur est faible.

On a déjà proposé de connecter, en parallèle à une diode de roue libre, un élément capacitif en série avec une résistance. Une telle association en série sert à filtrer les surtensions à l'ouverture de la diode. Toutefois, de tels circuits (généralement appelés "snubber") ne sont pas adaptables et sont figés à la fabrication. De plus, pour des circuits destinés à des puissances élevées (de quelques Watts à quelques kilowatts), de telles protections engendrent des pertes importantes.

Le brevet US-A-5 943 225 décrit un convertisseur à découpage ayant un élément passif (résistance) en parallèle sur un élément capacitif lui-même associé en série avec une diode.

Le document DE 36 39 495 A1 décrit un circuit d'aide à la commutation visant à réduire les pertes lors des commutations et non à limiter les surtensions. Un élément actif du circuit d'aide à la commutation requiert un signal de commande externe en fonction des périodes de conduction.

### Résumé de l'invention

Il serait souhaitable de protéger des circuits connectés en aval d'un circuit d'alimentation à découpage contre des surtensions inverses, en particulier liées à l'ouverture d'un interrupteur statique.

Il serait également souhaitable de disposer d'une solution susceptible d'être intégrée.

Selon l'invention il est prévu un convertisseur à découpage comme énoncé dans la revendication 1

Selon un mode de réalisation, le transistor est un transistor bipolaire dont les collecteur et émetteur sont couplés aux bornes de l'élément capacitif et dont une base est couplée à la sortie du comparateur.

Selon un mode de réalisation, ledit premier interrupteur est en série avec ledit enroulement secondaire entre deux bornes de sortie du convertisseur.

Selon un mode de réalisation, un deuxième interrupteur est en série avec ledit enroulement secondaire entre deux bornes de sortie du convertisseur, ledit premier interrupteur étant couplé en parallèle sur cette association en série.

Selon un mode de réalisation, une deuxième diode relie le point milieu entre l'enroulement secondaire et le deuxième interrupteur au point milieu entre l'élément capacitif et la première diode.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente schématiquement un mode de réalisation d'un convertisseur à découpage ;
la figure 2 représente un détail du circuit de la figure 1 ;
la figure 3 représente un détail du circuit de la figure 1 illustrant un autre mode de réalisation ;
les figures 4A, 4B et 4C sont des chronogrammes illustrant le fonctionnement du circuit de protection ;
la figure 5 représente partiellement un autre mode de réalisation d'un convertisseur à découpage ; et
la figure 6 représente partiellement encore un autre mode de réalisation d'un convertisseur à découpage.

### Description détaillée

De mêmes éléments ont été désignés par de mêmes références aux différentes figures. Par souci de clarté, seuls les éléments utiles à la compréhension de l'invention ont été représentés et seront décrits. En particulier, la destination de la tension produite par l'alimentation à découpage n'a pas été détaillée, l'invention étant compatible avec toute application usuelle d'une telle tension.

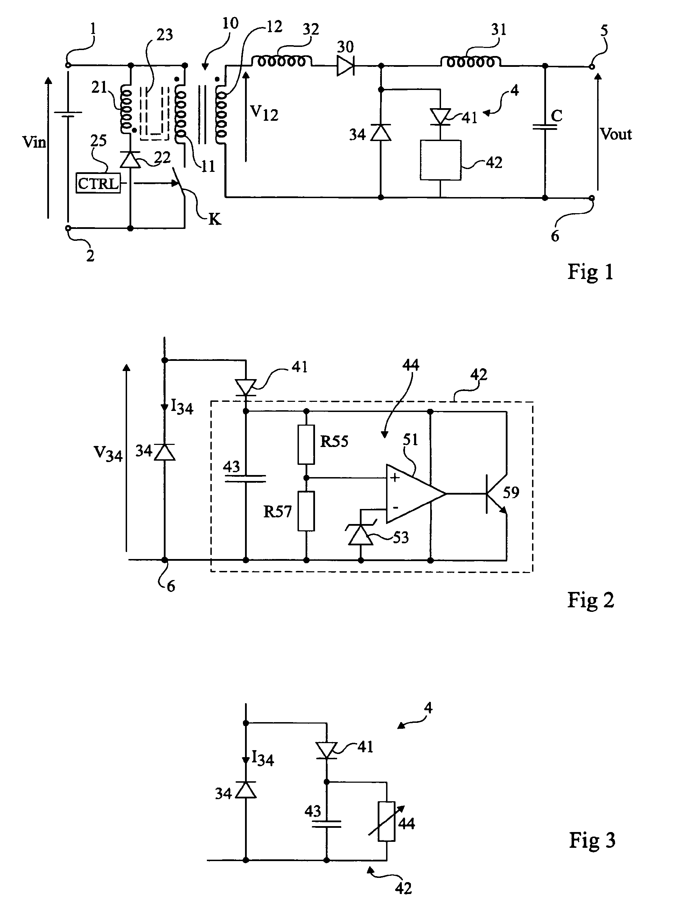

La figure 1 représente schématiquement un mode de réalisation d'un convertisseur à découpage (dit de type forward). Un tel convertisseur est basé sur l'utilisation d'un transformateur 10 dont un enroulement primaire 11 est alimenté, au rythme d'une commutation d'un interrupteur K de découpage, par une tension continue Vin appliquée entre deux bornes d'entrée 1 et 2. Dans l'exemple de la figure 1, l'enroulement primaire 11 est en série avec l'interrupteur K entre les bornes 1 et 2. Un montage dans lequel l'interrupteur K est en parallèle sur l'enroulement 11 peut aussi être prévu. L'interrupteur K est commandé par un circuit 25 (CTRL) fixant sa fréquence de commutation, par exemple de plusieurs dizaines de kilohertz à quelques centaines de kilohertz, et le rapport cyclique des impulsions de commande. Un circuit de démagnétisation comportant, de préférence, un élément inductif 21 en série avec une diode 22 entre les bornes 1 et 2, est associé au primaire du transformateur, l'anode de la diode 22 étant côté borne 2 d'application du potentiel inférieur (par exemple, la masse) de la tension Vin. L'enroulement 21 est couplé inductivement (couplage illustré par un pointillé 23) avec l'enroulement primaire 11. Les points de phases respectifs des enroulements 11 et 21 sont inversés.

Au secondaire du transformateur 10, un enroulement secondaire 12 ayant un point de phase du même côté que l'enroulement primaire 11 sert à récupérer l'énergie transférée au rythme du découpage opéré par l'interrupteur K. L'enroulement 12 est en série avec une diode 30 et un élément inductif 31 entre deux bornes 5 et 6 de sortie du convertisseur, destinées à fournir une tension continue Vout. L'anode de la diode 30 est côté enroulement 12. Un élément capacitif C de lissage relie les bornes 5 et 6. En figure 1, une inductance fictive 32 représentant l'inductance de fuite de l'enroulement 12 a été illustrée en série avec l'enroulement 12.

Une diode de roue libre 34 relie la cathode de la diode 30 à la masse 6 du secondaire. Cette diode 34 doit, en inverse, tenir une tension généralement appelée tension plateau, liée au rapport du nombre de spires entre les enroulements, de la tension d'entrée Vin et du rapport cyclique de découpage. En pratique, on prend une marge de sécurité d'environ 20 %. Cependant, lors de sa commutation à l'ouverture, des surtensions (ici négatives) apparaissent au-delà de cette tension plateau. Pour réduire ces surtensions, on prévoit de connecter en parallèle à la diode 34, un circuit 4 de limitation de sa tension inverse.

La figure 2 illustre un mode de réalisation du circuit de limitation 4. Un élément capacitif 43 est en parallèle avec un circuit actif 44 de limitation de la tension à ses bornes. Le circuit actif 44 comporte un amplificateur 51 dont une entrée (par exemple inverseuse) reçoit une référence de tension fournie par exemple par une diode Zener 53 et dont une autre entrée (par exemple non inverseuse) est connectée au point milieu d'un pont diviseur résistif formé de deux résistances R55 et R57 en série, couplées aux bornes de l'élément capacitif 43. La sortie de l'amplificateur 51 commande la base d'un transistor bipolaire de type NPN 59, également en parallèle sur l'élément capacitif 43. L'émetteur du transistor 59 est relié à la masse 6 et son collecteur est relié à la cathode de la diode 41. L'amplificateur 51 commande le transistor 59 en régime linéaire. L'alimentation de l'amplificateur 51 provient de l'élément capacitif 43.

La figure 3 illustre l'équivalent fonctionnel du circuit 44. Cela revient à connecter, en parallèle sur l'élément capacitif 43, une résistance variable 44.

La somme des valeurs des résistances R55 et R57 fixe la tension aux bornes de la capacité 43. Le rapport de leur valeur est choisi en fonction de la tension seuil de la diode Zener 53 fixée arbitrairement. La diode 53 agit en source de tension à son niveau de seuil. La tension aux bornes de l'élément capacitif 43 est choisie inférieure ou égale à la tension plateau. Ce choix résulte d'un compromis entre la dissipation acceptable et la qualité du filtrage des surtensions. Plus la tension est proche de la tension d'alimentation positive, plus le circuit dissipe mais mieux il filtre la surtension.

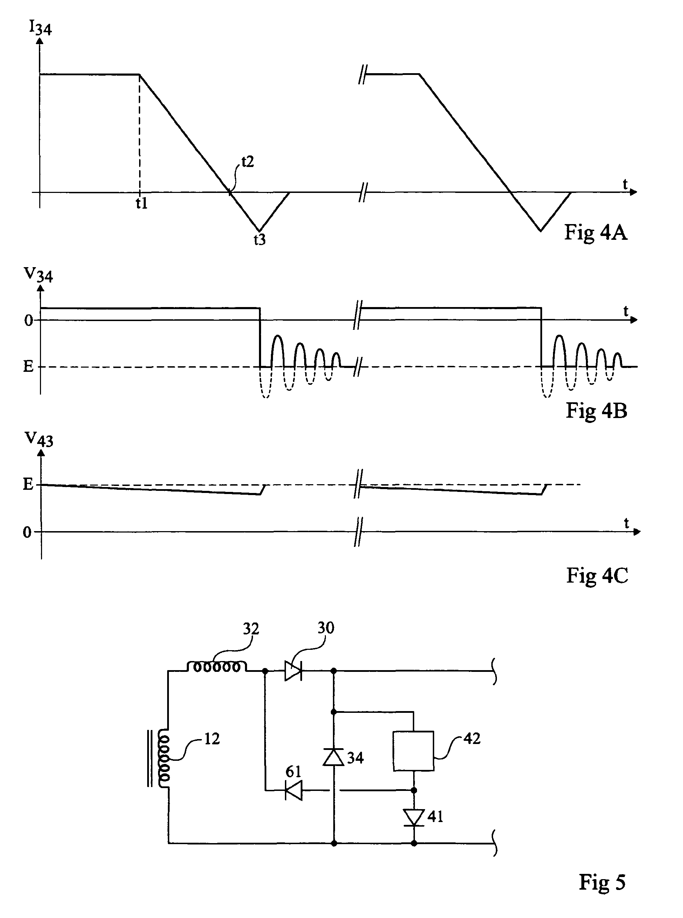

Les figures 4A, 4B et 4C sont des chronogrammes illustrant le fonctionnement du circuit de la figure 2. La figure 4A illustre un exemple d'allure du courant 134 dans la diode 34 lors de sa fermeture. La figure 4B illustre l'allure correspondante de la tension V₃₄ aux bornes de cette diode. La figure 4C illustre l'allure correspondante de la tension V₄₃ aux bornes de l'élément capacitif 43 du circuit de limitation. Dans cet exemple, on suppose que la tension est égale à la tension plateau E, fixée par les résistances R55 et R57.

A la fin de chaque période de conduction de la diode 43, (instant t1), le courant dans celle-ci se met à décroître avec une pente correspondant au rapport de la tension V₁₂ aux bornes de l'enroulement secondaire 12, divisée par la valeur L₃₂ de l'inductance de fuite 32. Le courant dans la diode s'inverse à un instant t2 où commence le phénomène de charges recouvrées. A un instant t3 où le courant I₃₄ se remet à croître pour évacuer les charges recouvrées, la tension V₃₄ aux bornes de la diode s'inverse brusquement. La figure 4B illustre un niveau négatif E correspondant à la tension plateau. Ce niveau correspond au niveau (représentant l'inverse de la tension aux bornes de l'enroulement secondaire 12) auquel se stabilise la tension inverse de la diode 34 jusqu'à sa commutation suivante.

Dans les applications qui sont plus particulièrement visées, la tension plateau est de plusieurs dizaines de volts et les surtensions peuvent dépasser la centaine de volts.

Sans circuit de protection, des pics de tension négatifs (illustrés en pointillés en figure 4B), nettement inférieurs à la tension E, apparaissent après l'instant t3. Ce sont ces pics qui requièrent de dimensionner habituellement la diode 34 pour qu'elle supporte ces surtensions inverses.

Grâce au circuit 4 et comme l'illustre les figures 4B et 4C, à l'instant t3, le circuit de protection s'active et rend le transistor 59 fortement conducteur, ce qui permet d'absorber les pics négatifs. Ainsi, la tension inverse aux bornes de la diode 34 est limitée à la tension E ou une tension inférieure fixée par R55/R57.

Comme l'illustre la figure 4C, la tension aux bornes du condensateur 43 décroît, depuis la tension E, pendant chaque période de conduction de la diode 34, jusqu'à l'instant t3, où elle croit par transfert d'énergie depuis l'inductance 32. A l'instant t3, la capacité 43 se charge par l'énergie emmagasinée dans l'inductance de fuite 32. La valeur de l'élément 43 fixe la variation de la tension V₄₃ à ses bornes. Le niveau atteint par la tension V₄₃ à l'issue de la décharge de l'inductance de fuite 32 dépend, entre autres, du courant inverse dans la diode 34.

Un circuit de protection tel qu'illustré permet de fixer de façon précise la tension à laquelle est protégé le circuit. Par ailleurs, les pertes générées sont inférieures à celles d'un circuit résistif et capacitif en série. La dissipation d'énergie s'effectue dans le transistor 59 dont les pertes sont plus faibles que celles d'un élément résistif série.

De plus, le circuit s'adapte de lui-même au fonctionnement de l'application (température, charge, etc.).

En outre, les éléments du circuit de protection sont intégrables.

La figure 5 représente partiellement un autre exemple de réalisation appliqué à la protection des deux diodes 30 et 34. Dans ce cas, les positions du circuit 42 et de la diode 41 sont inversées et une diode additionnelle 61 relie l'anode de la diode 41 à l'anode de la diode 30. La diode 61 permet de limiter les surtensions à l'ouverture de la diode 60, en tirant profit du même circuit 42. Le fonctionnement du montage de la figure 5 se déduit de celui exposé précédemment en relation avec la figure 3.

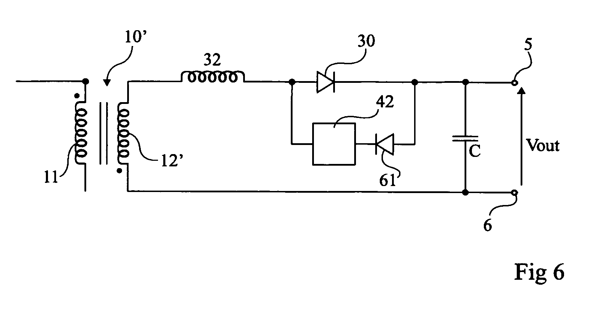

La figure 6 représente partiellement un autre exemple de réalisation appliqué à un convertisseur dit de type flyback. Par rapport au convertisseur de la figure 1, le point de phase de l'enroulement secondaire 12' du transformateur 10' est inversé et la diode de roue libre 34 est supprimée. Le circuit 4' est placé aux bornes de la diode 30. Cela revient à connecter la diode 61 et le circuit 42 en série, en parallèle sur la diode 30. Le fonctionnement du montage de la figure 5 se déduit de ce qui a été exposé précédemment. La figure 6 illustre une variante selon laquelle les positions respectives de la diode 61 et du circuit 42 ont été inversées par rapport aux montages précédents.

Divers modes de réalisation ont été décrits. Diverses variantes et modifications apparaîtront à l'homme de l'art. En particulier, les dimensions à donner aux différents composants et notamment aux résistances R55 et R57 et à l'élément 43 dépendent de l'application et de la tension maximum souhaitées en inverse. De plus, bien que l'invention ait été décrite en relation avec des tensions Vin et Vout positives, elle se transpose sans difficulté à des tensions négatives. En outre, on pourra utiliser une technologie MOS pour l'amplificateur 51 et le commutateur 59 plutôt qu'une technologie bipolaire. Enfin, bien que l'invention ait été décrite en relation avec une diode 34 (ou 30), le circuit 42 peut être associé à tout interrupteur (par exemple, un transistor MOS, un transistor IGBT, etc.) de l'alimentation à découpage, la diode 30 ou 34 étant une forme d'interrupteur autocommandé.

## Revendications

1. Convertisseur à découpage comprenant un transformateur inductif (10, 10') dont un enroulement secondaire (12, 12') est associé à au moins un premier interrupteur (34, 30), en parallèle duquel est connectée au moins une première diode (41, 61) en série avec un élément capacitif (43), et comportant en parallèle sur ledit élément capacitif, un circuit actif de limitation de la tension à ses bornes, ce circuit comportant :
un transistor (59) en parallèle aux bornes de l'élément capacitif (43) ; et
un amplificateur (51) dont une première entrée est couplée à un point milieu d'un pont diviseur résistif (R55, R57) en parallèle sur l'élément capacitif (43), et dont une deuxième entrée est connectée, par une source de tension (53), à une des bornes de l'élément capacitif, une sortie de l'amplificateur fournissant un signal de commande du transistor.

2. Convertisseur selon la revendication 1, dans lequel le transistor est un transistor bipolaire (59) dont les collecteur et émetteur sont couplés aux bornes de l'élément capacitif (43) et dont une base est couplée à la sortie du comparateur (51).

3. Convertisseur selon la revendication 1 ou 2, dans lequel ledit premier interrupteur (30) est en série avec ledit enroulement secondaire (12, 12') entre deux bornes (5, 6) de sortie du convertisseur.

4. Convertisseur selon la revendication 1 ou 2, dans lequel un deuxième interrupteur (30) est en série avec ledit enroulement secondaire (12) entre deux bornes (5, 6) de sortie du convertisseur, ledit premier interrupteur (34) étant couplé en parallèle sur cette association en série.

5. Convertisseur selon la revendication 4, dans lequel une deuxième diode (61) relie le point milieu entre l'enroulement secondaire (12) et le deuxième interrupteur (30) au point milieu entre l'élément capacitif (43) et la première diode (41).

## Claims

1. A switch-mode converter comprising an inductive transformer (10, 10') having a secondary winding (12, 12') associated with at least one first switch (34, 30), at least one first diode (41, 61) in series with a capacitive element (43) being connected in parallel with the first switch, and having in parallel with said capacitive element, an active circuit for limiting the voltage thereacross, said circuit comprising:
a transistor (59) in parallel with the capacitive element (43); and
an amplifier (51), a first input of which is coupled to a junction point of a resistive dividing bridge (R55, R57) coupled in parallel with the capacitive element (43), and a second input of which is connected, by a voltage source (53), to one of the terminals of the capacitive element for controlling the transistor.

2. The converter of claim 1, wherein the transistor is a bipolar transistor (59) having its collector and emitter coupled across the capacitive element (43) and having a base coupled to the output of the comparator (51).

3. The converter of claim 1 or 2, wherein said first switch (30) is in series with said secondary winding (12, 12') between two output terminals (5, 6) of the converter.

4. The converter of claim 1 or 2, wherein a second switch (30) is in series with said secondary winding (12) between two output terminals (5, 6) of the converter, said first switch (34) being coupled in parallel with this series association.

5. The converter of claim 4, wherein a second diode (61) connects the junction point of the secondary winding (12) and of the second switch (30) to the junction point of the capacitive element (43) and of the first diode (41).

## Patentansprüche

1. Ein Umschaltmoduskonverter, wobei der Konverter einen induktiven Transformator (10, 10') mit einer sekundären Wicklung (12, 12') aufweist, die mit wenigstens einem ersten Schalter (34, 30) verbunden ist, wenigstens eine erste Diode (41, 61) in Reihe mit einem kapazitiven Element (43), die parallel mit dem ersten Schalter geschaltet sind und wobei der Konverter parallel zu dem kapazitiven Element einen aktiven Schaltkreis zum Begrenzen der Spannung darüber aufweist, wobei der Schaltkreis Folgendes aufweist:
einen Transistor (59) parallel zu dem kapazitiven Element (43); und
einen Verstärker (51), wobei ein erster Eingang des Verstärkers mit einem Verbindungspunkt einer ohmschen Spannungsteilerbrücke (R55, R57) verbunden ist, die parallel zu dem kapazitiven Element (43) geschaltet ist, und wobei ein zweiter Eingang des Verstärkers über eine Spannungsquelle (53) mit einem der Anschlüsse des kapazitiven Elements zum Steuern des Transistors verbunden ist.

2. Der Konverter nach Anspruch 1, wobei der Transistor ein bipolarer Transistor (59) ist, der einen Kollektor und einen Emitter aufweist, die über das kapazitive Element (43) miteinander verbunden sind, und eine Basis aufweist, die mit dem Ausgang des Komparators (51) verbunden ist.

3. Der Konverter nach Anspruch 1 oder 2, wobei der erste Schalter (30) in Reihe mit der sekundären Wicklung (12, 12') zwischen zwei Ausgangsanschlüssen (5, 6) des Konverters geschaltet ist.

4. Der Konverter nach Anspruch 1 oder 2, wobei ein zweiter Schalter (30) in Reihe mit der sekundären Wicklung (12) zwischen zwei Ausgangsanschlüssen (5, 6) des Konverters geschaltet ist, wobei der erste Schalter (34) parallel zu dieser Reihenschaltung geschaltet ist.

5. Der Konverter nach Anspruch 4, wobei eine zweite Diode (61) den Verbindungspunkt der sekundären Wicklung (12) und des zweiten Schalters (30), mit dem Verbindungspunkt des kapazitiven Elements (43) und der ersten Diode (41) verbindet.
